(19) Europäisches Patentamt
European Patent Office
Office européen des brevets

(11) **EP 3 993 122 A1**

(12) **EUROPEAN PATENT APPLICATION**

(43) Date of publication:
**04.05.2022 Bulletin 2022/18**

(21) Application number: **20204965.6**

(22) Date of filing: **30.10.2020**

(51) International Patent Classification (IPC):
**H01M 10/0525** (2010.01)  **H01M 10/056** (2010.01)
**H01M 10/0562** (2010.01)  **C03C 10/00** (2006.01)

(52) Cooperative Patent Classification (CPC):
**H01M 10/0562; C03C 3/155; C03C 3/17;
C03C 10/00; H01M 10/0525; H01M 10/056;**
H01M 2300/0091

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SCHOTT AG
55122 Mainz (DE)**

(72) Inventors:
• **Schuhmacher, Jörg
70806 Kornwestheim (DE)**

• **Schneider, Meike
65232 Taunusstein (DE)**
• **Schmidbauer, Wolfgang
55126 Mainz (DE)**
• **Leukel, Sebastian
55128 Mainz (DE)**
• **Roters, Andreas
55118 Mainz (DE)**
• **Letz, Martin
55128 Mainz (DE)**
• **Samsinger, Rolf
65428 Rüsselsheim am Main (DE)**

(74) Representative: **Ullrich & Naumann PartG mbB
Schneidmühlstrasse 21
69115 Heidelberg (DE)**

(54) **SOLID ELECTROLYTE AND A LITHIUM-ION CONDUCTIVE GLASS-CERAMICS**

(57) The present invention relates to a method for producing a solid electrolyte comprising lithium-ion conductive glass-ceramics, said method comprising the steps of
- Providing at least one lithium ion conductor having a ceramic phase content and amorphous phase content,
- Providing a powder of said at least one lithium ion conductor, said powder having a polydispersity index between 0.5 and 1.5, preferably between 0.8 and 1.3, preferably between 0.85 and 1.15,
and
a) Incorporating said powder into a polymer electrolyte or a polyelectrolyte and/or
b) Forming an element using said powder.

Fig. 1

EP 3 993 122 A1

**Description**

The present invention relates to a method for producing a solid electrolyte comprising lithium-ion conductive glass-ceramics.

The present invention further relates to a lithium-ion conductive glass-ceramics powder comprising at least one lithium ion conductor.

The present invention further relates to a solid electrolyte.

The present invention even further relates to a battery, preferably an all solid state battery or a lithium-air battery, comprising at least one battery component.

The present invention even further relates to a system for producing a solid electrolyte comprising lithium-ion conductive glass-ceramics.

Batteries, for instance lithium ion batteries are used in many different devices, in particular in portable devices like laptops, smartphones or the like, for providing electrical energy for those devices. Meanwhile, lithium ion batteries are also used in electric vehicles for providing electrical energy to the engine, i.e. one or more electric motors. Although classical lithium ion batteries have already a high energy density, the provided energy density is too low to allow a large driving range, which is comparable to the driving range of a combustion engine. Known lithium ion batteries have already an energy density, which is near the theoretical maximum. Solid state batteries may have the potential to overcome the limits of today's Lithium ion batteries. Replacing a liquid electrolyte by a solid electrolyte may enable new high energy density electrode materials like Lithium metal anodes. To achieve good cell performance a high ion conductivity of the solid electrolyte is important. Therefore, another focus is the conductivity of a lithium ion based battery, which is still rather low.

In German patent application DE 10 2017 128 719 A1 a lithium-ion-conducting composite material and process of producing are provided. The composite material includes at least one polymer and lithium-ion-conducting particles. The particles have a sphericity of at least 0.7. The composite material includes at least 20 vol % of the particles for a polydispersity index PI of the particle size distribution of <0.7 or are present in at least 30 vol % of the composite material for the polydispersity index in a range from 0.7 to <1.2, or are present in at least 40 vol % of the composite material for the polydispersity index of >1.2.

In German patent application DE 10 2018 102 387 B3 a lithium ion-conducting glass ceramic is shown comprising a residual glass phase that is also ion-conducting, a process for the production thereof as well as its use in a battery. The glass ceramic comprises a main crystal phase which is isostructural to the NaSICon crystal phase, wherein the composition can be described with the following formula: $Li_{1+x-y}M_y^{5+}M_x^{3+}M_{2-x-y}^{4+}(PO_4)_3$, wherein x is greater than 0 and at most 1, as well as greater than y. y may take values of between 0 and 1. Here, the following boundary condition has to be fulfilled: 1+x-y>1. Here, M represents a cation with the valence of +3, +4 or +5. $M^{3+}$ is selected from Al, Y, Sc or B, wherein at least Al as trivalent cation is present. Independently thereof, $M^{4+}$ is selected from Ti, Si or Zr, wherein at least Ti as tetravalent cation is present. Independently thereof, $M^{5+}$ is selected from Nb, Ta or La.

In German patent application DE 10 2014 100 684 A1 a glass ceramic containing lithium-ions and having a garnet-like main crystal phase having an amorphous proportion of at least 5% is disclosed. The garnet-like main crystal phase preferably has the chemical formula $Li_{7+x-y}M^{II}xM^{III}_{3-x}M^{IV}_{2-y}M^V_yO_{12}$, wherein $M^{II}$ is a bivalent cation, $M^{III}$ is a trivalent cation, $M^{IV}$ is a tetravalent cation, $M^V$ is a pentavalent cation. The glass ceramic is prepared by a melting technology preferably within a Skull crucible and has an ion conductivity of at least $5.10^{-5}$ S/cm, preferably of at least $1.10^{-4}$ S/cm.

Embodiments of the invention therefore address the problem of providing a higher conductivity of lithium-ion conductive glass-ceramics, a solid electrolyte and a battery. Embodiments of the invention address the further problem of providing a cost effective method for manufacturing and a corresponding system. Embodiments of the invention address the further problem of providing an alternative lithium-ion conductive glass-ceramics, an alternative solid electrolyte and an alternative battery and an alternative method for manufacturing as well as an alternative system.

In an embodiment, the present invention provides a method for producing a solid electrolyte comprising lithium-ion conductive glass-ceramics, said method comprising the steps of

- Providing at least one lithium ion conductor having a ceramic phase content and amorphous phase content,
- Providing a powder of said at least one lithium ion conductor, said powder having a polydispersity index between 0.5 and 1.5, preferably between 0.8 and 1.3, preferably between 0.85 and 1.15,
and

    a) Incorporating said powder into a polymer electrolyte or a polyelectrolyte and/or
    b) Forming an element using said powder.

In a further embodiment, the present invention provides a lithium-ion conductive glass-ceramics powder comprising at least one lithium ion conductor, said at least one ion conductor comprising a ceramic phase content and amorphous phase content, wherein said at least one ion conductor has said powder having a polydispersity index between 0.5 and 1.5, preferably between 0.8 and 1.3, preferably between 0.85 and 1.15.

In a further embodiment, the present invention provides a solid electrolyte, manufactured with a method according to one of the claims 1-7.

In a further embodiment the present invention provides a battery, preferably an all solid state battery or a lithium-air battery, comprising at least one battery component, said at least one battery component comprising a solid electrolyte according to claim 15.

In a further embodiment the present invention provides a system for producing a solid electrolyte comprising lithium-ion conductive glass-ceramics, preferably for performing with a method according to one of the claims 1-7, said system comprising a first provision entity adapted to provide at least one lithium ion conductor having a ceramic phase content and amorphous phase content,

a second provision entity adapted to provide a powder of said at least one lithium ion conductor, said powder having a polydispersity index between 0.5 and 1.5, preferably between 0.8 and 1.3, preferably between 0.85 and 1.15,

and

a) an incorporating entity adapted to incorporate said powder into a polymer electrolyte or a polyelectrolyte and/or
b) a forming entity adapted to form an element using said powder.

One of the advantages is that a higher conductivity of the lithium-ion conductor glass ceramics can be obtained compared to conventional lithium ion conductor glass-ceramics, in particular for the grain-core conductivity.

The term "polydispersity index" relating to the particle size distribution is to be understood as common logarithm (logarithm with base 10) of the quotient of the $d_{90}$- and $d_{10}$-value of the diameter distribution : $PI=\log(d_{90}/d_{10})$.

The term "d-value" as basis for the $d_{90}$-value and $d_{10}$-value is determined as follows:

Independently of their real sphericity, the particles of a powder are generally distinguished with the aid of a volume-equivalent sphere diameter, which has to be measured, and are ordered into selected classes according to their size. To represent a particle size distribution, a determination is made of the quantity fractions with which the respective classes of particle are present in the powder.

This is done using different quantity types. If the particles are counted, the quantity type is the number. In the case of weightings, conversely, it is the mass or, in the case of homogeneous density Qr, the volume. Other types are derived from lengths, projection surfaces and surface areas.

The following are distinguished:

| Quantity type: | Index r: |
| --- | --- |
| Number | 0 |
| Length | 1 |
| Area | 2 |
| Volume (mass) | 3 |

One common quantity measure for describing the particle size distribution in powders is formed by the cumulative distribution Qr. The index r identifies the quantity type according to the table above.

The cumulative distribution function Qr (d) indicates the standardized quantity of all particles having an equivalent diameter less than or equal to d. Explicitly defined below are cumulative distributions of the two most commonplace quantity types:

Particle Number (r = 0).

Let $N_i$ be the number of all particles investigated with a diameter d less than or equal to the diameter $d_i$ under consideration and let N be the total number of all particles investigated. In that case

$$Q_0(d_i) = \frac{N_i}{N}$$

Particle Mass (r = 3).

Let $m_i$ be the mass of all particles investigated with a diameter d less than or equal to the diameter $d_i$ under consideration, and let m be the total mass of all particles investigated. In that case

$$Q_3(d_i) = \frac{m_i}{m}$$

In the sense of the invention, $d_i$ values are understood to be equivalent diameter values for which the $Q_3(d_i)$ cumulative distribution function adopts the following values:

- $d_{10}$: $Q_3(d_{10})$ = 10%, i.e. 10 weight.-% of the particles have a diameter less than or equal to $d_{10}$.
- $d_{50}$: $Q_3(d_{50})$ = 50%, i.e. 50 weight.-% of the particles have a diameter less than or equal to $d_{50}$.
- $d_{90}$: $Q_3(d_{90})$ = 90%, i.e. 90 weight.-% of the particles have a diameter less than or equal to $d_{90}$.
- $d_{99}$: $Q_3(d_{99})$ = 99%, i.e. 99 weight.-% of the particles have a diameter less than or equal to $d_{99}$.
- $d_{100}$: $Q3(d_{100})$ = 100%, i.e. 100 weight.-% of the particles have a diameter less than or equal to $d_{100}$.

In the sense of the present specification, the term "polydispersity index" may be understood synonymously with the term "polydispersion index".

Further features, advantages and preferred embodiments are disclosed or may become apparent in the following.

According to an embodiment prior to step b), a step c) of pressing said powder to obtain a pellet as precursor for said element is performed. This may enhance forming an element using said powder.

According to a further embodiment prior to step b), a step d) of incorporating said powder into a ceramic precursor composition, preferably a slip, is performed. This may enable to perform a casting forming process, for instance a film casting process, to prepare an element for sintering afterwards.

According to a further embodiment in step d) at least one binding agent is added. This may enable a fine and enhanced control of the casting forming process.

According to a further embodiment, said element is sintered. Sintering enables providing a solid element although the precursors of the element do not chemically bind to one another.

According to a further embodiment, said at least one lithium ion conductor is provided comprising at least one of

- One or more ion lithium conductors having a garnet type structure, preferably LLZO, lithium niobium garnet, lithium tantalum garnet and/or lithium aluminium garnet, preferably according to general formula

$$Li_{7-3x+y'+2y''-z'-2z''}Al_x^{3+}La_{3-y-y'-y''}M_y^{3+}M_{y'}^{2+}My_{''}^{1+}Zr_{2-z-z'-z''}M_z^{4+}M_{z'}^{5+}M_{z''}^{6+}O_{12+/-\delta},$$

  wherein $M^{3+}$ represents one or more trivalent cations having an ion radius smaller than $La^{3+}$, without $Al^{3+}$, $M^{2+}$ represents one or more bivalent cations, $M^{1+}$ represents one or more monovalent cations except $Li+$, $M^{4+}$ represents one or more tetravalent cations except $Zr^{4+}$, $M^{5+}$ represents one or more pentavalent cations, and wherein $M^{6+}$ represents one or more hexavalent cations, and wherein $0,1 \leq x < 1$, $0 < y < 2$, $0 \leq y' < 0,2$, $0 \leq y'' < 0,2$, $0 \leq y'+y'' < 0,2$, $0 \leq z < 0,5$, $0 \leq z' < 0,8$, $0 \leq z'' < 0,5$, $0 \leq \delta < 2$,
- One or more lithium ion conductors having a NASICON type structure, preferably LATP - $Li_{1.3}Al_{0.3}Ti_{1.7}P_3O_{12}$, LAGP - $Li_{1.5}Al_{0.5}Ge_{1.5}(PO_4)_3$ or any combination thereof,
- One or more lithium ion conductors having a perovskite type structure, preferably LLT - $Li_{3x}La_{2/3-x}TiO_3$,
- One or more lithium ion conductors having a spinel structure,
- One or more lithium ion conductors having a LISICON-type structure, preferably lithium zinc germanate.

An advantage may be that a simple ion conductor is provided having a high conductivity at room temperature and being electrochemically stable.

According to a further embodiment, said ceramic phase content is the main content of said lithium ion conductor. This may provide an even higher conductivity of the solid electrolyte.

According to a further embodiment of the lithium-ion conductive glass-ceramics powder, said ceramic phase content is the main content of said lithium ion conductor. This may provide an even higher conductivity of the solid electrolyte.

According to a further embodiment of the lithium-ion conductive glass-ceramics powder, the volume based median particle size of said powder is below 2 micrometers, preferably below 1.5 micrometers, preferably below 1.0 micrometers. This may enable to provide particles with a low diameter enabling an easier sintering process.

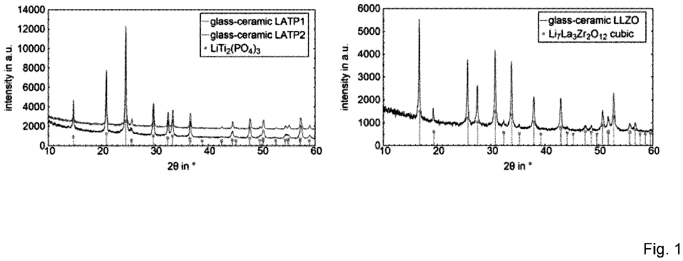

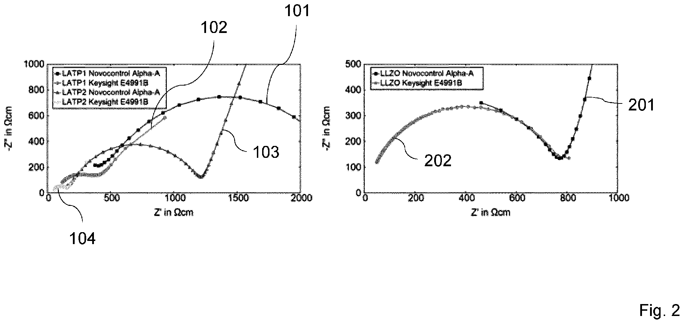

According to a further embodiment of the lithium-ion conductive glass-ceramics powder, said lithium-ion conductive glass-ceramics powder having a grain-core conductivity of more than 0,75 mS/cm, preferably more than 1,5 mS/cm, preferably more than 2,3 mS/cm, preferably more than 5 mS/cm, preferably more than 6 mS/cm, and/or a grain-boundary conductivity of more than 0,5 mS/cm, preferably more than 0,75 mS/cm, preferably more than 0,9 mS/cm. This may allow a high conductivity of the lithium-ion conductive glass-ceramics powder enhancing the fields of application of end products based on said powder as well as their properties. The conductivity as described here was measured using a CRT-method as described in detail below in connection with Figures 1 and 2.

According to a further embodiment of the lithium-ion conductive glass-ceramics powder, said at least one lithium ion conductor has an overall density lower than the density of said lithium ion conductor having only a ceramic phase, preferably wherein said overall density is at least 2.5% lower, preferably at least 3.0% lower, preferably at least 3.5% lower, preferably by at least 5% lower. This may allow to even further enhance the gravimetric energy density.

According to a further embodiment of the lithium-ion conductive glass-ceramics powder, the purity of said ceramic phase content of said at least one lithium ion conductor is at least 95%, preferably more than 97%, preferably more than 99%. This may allow to even further enhance the conductivity since forming of unwanted substances like $AlPO_4$ enriched phases at the grain-boundaries for LATP-based lithium ion conductive glass ceramic powder can reduced.

According to a further embodiment of the battery, said battery comprising at least two electrodes, wherein said at least one battery component is a separator separating said at least two electrodes. This may have the advantage of providing a separator element for a battery based on the solid electrolyte avoiding short circuits within the battery.

According to a further embodiment of the battery, said separator is arranged on a surface of at least one of said at least two electrodes and/or said separator is provided in form of a free-standing membrane. This may have the advantage of providing a separator in a flexible way.

There are several ways how to design and further develop the teaching of the present invention in an advantageous way. To this end, it is to be referred to the patent claims subordinate to the independent claims on the one hand and to the following explanation of further examples of embodiments of the invention, illustrated by the drawing on the other hand. In connection with the explanation of the further embodiments of the invention by the aid of the drawing, generally further embodiments and developments of the teaching will be explained.

In the drawings

Fig. 1  shows an X-ray diffraction diagram of glass ceramic LATP particles (left) and glass ceramic LLZO particles (right);

Fig. 2  shows Nyquist diagrams of Au-LATP-Au (left) and Au-LLZO-Au (right); and

Fig. 3  shows steps of a method according to an embodiment of the present invention.

To determine the conductivity of elements comprising or being manufactured of a lithium-ion conductive glass-ceramics powder, the coaxial reflection technique - CRT in the following - is used. Using CRT enables to obtain knowledge about the underlying conductivity mechanisms considering also the local microstructure e.g. pores, grain-boundaries and the preparation conditions in particular for fast ionic conductors, i.e. $\sigma > 10^{-4}$ S/cm compared with Electrochemical Impedance Spectroscopy - EIS - and Nuclear Magnetic Resonance - NMR. Especially CRT enables to determine the relative permittivity more accurately at room temperature. Furthermore, the advantage of amorphous phase assisted sintering is shown in the following for two glass-ceramic LATP and one LLZO sample. For a 100% dense LATP sample CRT reveals a high grain-core conductivity of $6 \times 10^{-3}$ S/cm similar to the conductivity of ideal single crystals.

For example, LATP is known to have high grain-core conductivity, but high resistance pathways along grain-boundaries. Electrochemical impedance spectroscopy - EIS - measurement setups are capable to measure up to several MHz. At room temperature, the grain-core conductivity of LATP is too high to be well resolved. Therefore, measurements have to be performed below room temperature to detect both the grain-core and grain-boundary process and extrapolate via the Arrhenius law leading to uncertainties. Alternatively, sample geometry has to be changed, e.g. by increasing the thickness and decreasing the electrode area. Via NMR different processes can be detected on several timescales, however, conversion from NMR diffusion coefficients to the more relevant conductivity is cumbersome. This is regularly done via the Nernst-Einstein equation, which strictly only applies for conductors with non-interacting charge carriers. Although this is the case for dilute liquid solutions, deviations will occur for solid ion conductors. Additionally, the average jump distance is a crucial parameter. Yet, experimental estimation is a significant error source. A further disadvantage is that calculated activation energies typically differ from the ones obtained from EIS measurements.

To prove the feasibility of the CRT-method, two glass-ceramic LATP powders and one glass-ceramic LLZO powder were sintered and measured via classical EIS and a coaxial reflection technique CRT.

Furthermore, in the following it is shown that amorphous phase assisted sintering is a successful strategy to obtain dense samples with very high conductivity.

*Sample preparation*

These powders were obtained from a unique melting route at semi-industrial scale. Thus, inhomogeneity effects of different batches are less pronounced.

The glass-ceramic lithium ion conductors $Li_{1.3}Al_{0.3}Ti_{1.7}P_3O_{12}$ (LATP) and $Li_7La_3Zr_2O_{12}$ (LLZO) were produced via melting routes at the SCHOTT AG. As glass-ceramics, these ion conductors comprise both a ceramic and a unique amorphous phase. Two different LATP powders with the same crystalline stoichiometry, but different content of amorphous phase are produced.

In the following production of the two LATP powders, named LATP-1 and LATP-2 is described in detail:

LATP-1 :

A precursor glass composition for a lithium ion conductive phosphate based glass ceramics LATP-1 was melted as described for the highly conductive boron-free reference samples in DE 10 2018 102 387 B3, which is herein incorporated by reference.

Subsequently, the glass was ceramized and the as-obtained glass-ceramic was crushed and grinded in different comminution steps. The particles in the resulting powder had a diameter of 0.30 $\mu$m, 50% by weight a diameter of approximately 1.09 $\mu$m, 90% by weight a diameter of approximately 2.83 $\mu$m and 99% by weight a diameter of approximately 4.56 $\mu$m. In this case, the polydispersity index accordingly has a value of 0.97. The particle sizes were measured using the method of static light scattering according to ISO 13320 (2009) with a particle size measuring instrument of the company CILAS of type 1064. The measurement was carried out in water as medium and evaluated according to the Fraunhofer method.

The slurry was dried on a rotary evaporator. From the obtained powder, compacts were produced and sintered at 1000 °C for 12 hours. The conductivity of the sintered compacts was then determined.

LATP-2:

A precursor glass composition for a lithium ion conductive phosphate-based glass ceramic LATP-2 was melted as described for the highly conductive boron-containing reference samples in DE 10 2018 102 387 B3, , which is herein incorporated by reference.

Subsequently, the glass was ceramized and the as-obtained glass-ceramic was crushed and grinded in different comminution steps. The particles in the resulting powder had a diameter of 0.28 $\mu$m, 50% by weight a diameter of approximately 1.01 $\mu$m, 90% by weight a diameter of approximately 2.84 $\mu$m and 99% by weight a diameter of approximately 4.68 $\mu$m. In this case, the polydispersity index accordingly has a value of 1.00. The particle sizes were measured using the method of static light scattering according to ISO 13320 (2009) on a particle size measuring device of the company CILAS of type 1064. The measurement was carried out in water as medium and evaluated according to the Fraunhofer method.

The slurry was dried on a rotary evaporator. From the obtained powder compacts were produced and sintered at 800 °C for 12 hours. The conductivity of the sintered compacts was then determined.

LLZO:

A precursor glass composition for a lithium ion conductive garnet based glass ceramic LLZO was melted as described in DE 10 2014 100 684 A1, , which is herein incorporated by reference.

Subsequently, the cooled melt was crushed and grinded in different comminution steps. The particles in the resulting powder had a diameter of about 0.36 $\mu$m (10 weight.-%), a diameter of about 1.14 $\mu$m (50 weight.-%), a diameter of about 2.52 $\mu$m (90 weight.-%) and a diameter of about 3.80 $\mu$m (99 weight.-%). In this case, the polydispersity index accordingly has a value of 0.85. The particle sizes were measured using the method of static light scattering according to ISO 13320 (2009) on a particle size measuring instrument of the company CILAS of type 1064. The measurement was carried out in water as medium and evaluated according to the Fraunhofer method.

From the powder obtained in this way, compacts were produced and sintered at 1130 °C for 30 min. The conductivity of the sintered compacts was then determined.

In addition, the conduction mechanism is in the following compared to a LLZO sample. LLZO has the disadvantage that the high conductive cubic modification was stabilized at room temperature.

Compared to pure ceramic LATP and LLZO, the skeleton density of glass-ceramic LATP and LLZO is reduced, due to the lower density of the amorphous phase. The LATP with low amorphous phase content will be denoted as LATP-1 in the following. It has a skeleton density of 2.86 g/cm$^3$, which is close to the pure ceramic density of 2.90 g/cm$^3$. The LATP with high amorphous phase content has a skeleton density of 2.80 g/cm$^3$ denoted as LATP-2 in the following. The difference in density is more significant for glass-ceramic LLZO with 4.84 g/cm$^3$ compared to the ideal density of 5.10 g/cm$^3$. Amongst all powders, the volume based median particle size is 1 $\mu$m or below. The particle size distributions are rather narrow. The powders were pressed to discs with a diameter of 10 mm and a thickness of 1 to 2 mm. Afterwards the discs were sintered. Finally, the sintered discs were transferred into an argon-filled glove box and polished with sandpaper.

*Sample measurements*

Prior to the measurements, the samples have been sputtered with gold to ensure sufficient electric contact. Conventional EIS has been performed with a Novocontrol Alpha-A Analyzer with a voltage amplitude of 20 mV in the frequency range of 0.1 Hz until 20 MHz. A sealed measurement cell was used to avoid contact of the LLZO with air. ZView2 of Scribner Associates Inc. was used for fitting. Then a Keysight E4991B Impedance Analyzer in the frequency range of 1 MHz to 3 GHz was used for the reflection measurement of the dielectric halfspace with an open-ended probe, i.e. skin depth >> thickness of the probe. As ion-conductors, in contrast to low-loss dielectric ceramics, have a higher dielectric-loss, i.e. due to the desired ionic motion, the additional dielectric-loss in the gold-layers does not deteriorate the results.

Since at frequencies between 1 GHz and 3 GHz, a series inductance dominates the measurement due to the metallic connections and at room temperature the frequency range above 1 GHz is yet of no interest for evaluation, the highest frequencies containing no sample information, were neglected. All measurements were performed in air.

Results

*Structural analysis*

For a high conductivity, the purity of the ceramic phase content of LATP and LLZO should be high. For example, LATP forms AlPO$_4$ (JCPDS: 00-011-0500) enriched phases at grain-boundaries or unwanted TiO$_2$ (JCPDS: 00-088-1175, 00-084-1286) impurity phases. LLZO samples are even more sensitive. Besides the tetragonal LLZO phase, La$_2$Zr$_3$O$_7$ (JCPDS: 01-075-03446) and Li$_2$CO$_3$ (JCPDS: 01-083-1454) are known insulating impurity phases. The XRD of glass-ceramic LATP-1, LATP-2 (left), and LLZO (right) is shown in Figure 1.

Only the LTP phase and the cubic LLZO phase can be detected without any additional impurities. Consequently, a high conductivity is to be expected. Furthermore, for the LATP-1 and LATP-2 the effect of the different amorphous phase content can be investigated without perturbations from any impurities.

*Morphological analysis*

The open porosity of pressed pellets was detected to be about 34 %. However, after sintering LATP-1 samples still have a low geometrical density (solids concentration) of about 66 to 70 %. In contrast, the LATP-2 samples expose a shrinkage leading to high densities of up to nearly 100%, i.e. nearly no pores. Also for the LLZO samples, the amorphous phase leads to high densities of 95 to 97%.

*Electrochemical Performance*

The combined normalized impedance data obtained from the conventional EIS measurement with the Novocontrol Alpha-A analyzer and the high-frequency CRT measurement with the Keysight E4991B is shown in Figure 2. The impedance has been normalized with respect to the area and thickness of the samples for comparison, due to the different shrinkage.

At low frequencies, the blocking of lithium ions is visible. This leads to a straight line of constant slope. A deviation from 90° versus the abscissa Z' can be interpreted as an effect from a rough electrode surface with microscopic inhomogeneities.

For the LATP-1 (reference signs 101, 102) and LATP-2 (reference signs 103, 104) samples, conventional EIS resolves a depressed semicircle, i.e. a resistor in parallel with a constant-phase-element (CPE), at intermediate frequencies (reference signs 101, 103).

The obtained capacities at intermediate frequencies are in the order of 10$^{-9}$ F. Capacitances in the nF-regime can be interpreted as a grain-boundary process. At high frequencies, the resistance from origin indicates another process. It is rather difficult to fit this process with another semi-circle accurately.

In contrast, CRT is capable to resolve this semi-circle at room temperature. For LATP-1 (reference signs 102, 104) there is a very small deviation of the impedance compared to the EIS-data (reference signs 101, 103). Due to experimental limitations, the thickness and diameter of this sample are at the upper limit that is acceptable for the metallic fixture of the sample holder. Nevertheless, the grain-core, also called "bulk" semi-circle is well resolved and the capacitance is in the order of $10^{-11}$ F.

The conductivity of the sintered discs can be calculated according to the following equation:

$$\sigma = \frac{1}{R} \cdot \frac{t}{A}$$

$$(1)$$

In the equation R is the fitted resistance, t is the thickness of the sample, and A is the electrode area. For LATP-1 101, 102 the grain-boundary conductivity from EIS is $5.04 \times 10^{-4}$ S/cm with a grain-core conductivity of $2.37 \times 10^{-3}$ S/cm. The grain-core conductivity obtained from the CRT is $2.15 \times 10^{-3}$ S/cm. LATP-2 103, 104 has a grain-boundary conductivity of $9.49 \times 10^{-4}$ S/cm and a high grain-core conductivity of $6.00 \times 10^{-3}$ S/cm, which matches well with the one obtained from the CRT setup of $5.91 \times 10^{-3}$ S/cm. Therefore, both grain-core and grain-boundary conductivity increase with density.

Additionally, the results of LATP-2 103, 104 can be compared to the glass-ceramic LLZO 201, 202. Alike the amorphous phase leads to a high relative density. For LLZO in Figure 2 on the right side only one semi-circle is visible even with the extension to the GHz regime. The capacitance is in the order of $10^{-11}$ F and can be identified with the bulk process. The conductivity of LLZO obtained from EIS is $8.29 \times 10^{-4}$ S/cm (reference sign 201) and the one from the CRT is $8.23 \times 10^{-4}$ S/cm (reference sign 202). These values are within a similar order of magnitude compared to other LLZO with high relative density.

Regarding both measurement methods, either EIS or CRT, the resulting conductivity values are similar. However, for the EIS measurement one has to assume, that no other processes in the unresolved high-frequency regime are present.

The high-frequency relative permittivity (dielectric constant) $\varepsilon r$ can be derived via the following equation:

$$\epsilon_R = \frac{1}{i\omega\epsilon_0} \cdot \frac{1}{Z}$$

$$(2)$$

with the vacuum permittivity $\varepsilon_0 = 8.85419 \times 10^{-12}$ F/m and the imaginary unit $i = \sqrt{-1}$. As the normalized impedance Z can be fitted precisely, the limited frequency range of the EIS setup leads to an inaccurate high-frequency relative permittivity.

In contrast, via CRT the fast ionic transport processes are well resolved at room temperature. Hence, both conductivity and high-frequency relative permittivity can be determined precisely.

In the following table

| Estimation of the relative permittivity according to equation 2 | | |
|---|---|---|
| | Relative permittivity from EIS | Relative permittivity from CRT |
| LATP-1 | 73.78 | 32.20 |
| LATP-2 | 106.17 | 76.83 |
| LLZO | 72.87 | 93.31 |

the calculated relative permittivities of the EIS and CRT are compared. The different relative permittivities of LATP-1 and LATP-2 samples might be explained with their microstructure.

Nevertheless, significant differences arise from the limited resolution of EIS. Furthermore, the values were highly temperature-dependent due to the limited frequency range of the EIS.

To conclude, measurements using the coaxial reflection technique enable accurate measurements expanding the measurement range of conventional electrochemical impedance spectrometers. As a result, the ultra-fast conductivity processes at high frequencies could be resolved and interpreted, complementing first estimations from NMR or microelectrode measurements. Furthermore, reliable high-frequency relative permittivities can be calculated accurately at room temperature.

Amorphous-phase assisted sintering allows obtaining electrolytes with enhanced microstructure and a relative density of up to 100%. By optimizing the amorphous phase, glass-ceramic LATP has a high grain-boundary conductivity close to $10^{-3}$ S/cm. Moreover, the resolved grain-core conductivity of $6x10^{-3}$ S/cm matches well with the data known from single-crystals, demonstrating the feasibility of the coaxial reflection technique.

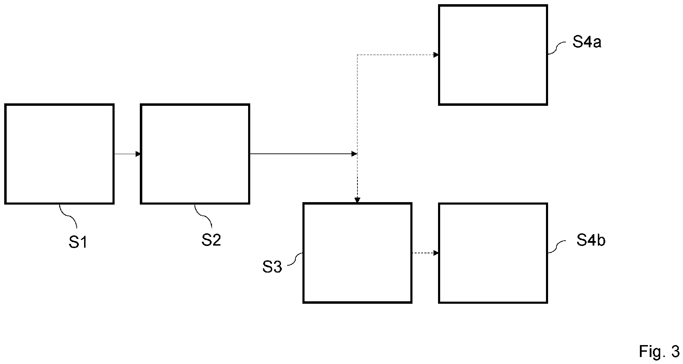

Fig. 3 shows steps of a method according to an embodiment of the present invention.

In detail, steps of a method for producing a solid electrolyte comprising lithium-ion conductive glass-ceramics are shown.

The method comprises the following steps

- Providing S1 at least one lithium ion conductor having a ceramic phase content and amorphous phase content,
- Providing S2 a powder of said at least one lithium ion conductor, said powder having a polydispersity index between 0.5 and 1.5, preferably between 0.8 and 1.3, preferably between 0.85 and 1.15,

and

 a) Incorporating S4a said powder into a polymer electrolyte or a polyelectrolyte and/or
 b) pressing S3 said powder to obtain a pellet as precursor for said element is performed and
 c) Forming S4b an element using said powder.

To summarize, at least one of the embodiments of the present invention may enable the following advantages or provides or enables the following features

- high overall conductivity
- measurement of ultra-fast conductivity processes at high frequencies
- simple and cost-effective implementation
- solid state electrolyte having a high conductivity, in particular very high grain-core conductivity above 5 mS/cm

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**List of reference signs**

101, 102    Complex impedance of LATP-1
103, 104    Complex impedance of LATP-2
201, 202    Complex impedance of LLZO

**Claims**

1. Method for producing a solid electrolyte comprising lithium-ion conductive glass-ceramics, said method comprising the steps of

 - Providing at least one lithium ion conductor having a ceramic phase content and amorphous phase content,
 - Providing a powder of said at least one lithium ion conductor, said powder having a polydispersity index between 0.5 and 1.5, preferably between 0.8 and 1.3, preferably between 0.85 and 1.15,
 and

 a) Incorporating said powder into a polymer electrolyte or a polyelectrolyte and/or
 b) Forming an element using said powder.

2. Method according to claim 1, wherein prior to step b), a step c) pressing said powder to obtain a pellet as precursor for said element is performed.

3. Method according to one of the claims 1-2, wherein prior to step b), a step d) incorporating said powder into a ceramic precursor composition, preferably a slip, is performed, preferably wherein in step d) at least one binding agent is added.

4. Method according to one of the claims 1-3, wherein said element is sintered.

5. Method according to one of the claims 1-4, wherein said at least one lithium ion conductor is provided comprising at least one of

- One or more ion lithium conductors having a garnet type structure, preferably LLZO, lithium niobium garnet, lithium tantalum garnet and/or lithium aluminium garnet, preferably according to general formula

$$Li_{7-3x+y'+2y''-z'-2z''}Al_x^{3+}La_{3-y-y'-y'}M_y^{3+}My'^{2+}M_y''^{1+}Zr_{2-z-z'-z''}M_Z^{4+}M_{z'}^{5+}M_{z''}^{6+}O_{12+/-\delta},$$

wherein $M^{3+}$ represents one or more trivalent cations having an ion radius smaller than $La^{3+}$, without $Al^{3+}$, $M^{2+}$ represents one or more bivalent cations, $M^{1+}$ represents one or more monovalent cations except $Li+$, $M^{4+}$ represents one or more tetravalent cations except $Zr^{4+}$, $M^{5+}$ represents one or more pentavalent cations, and wherein $M^{6+}$ represents one or more hexavalent cations, and wherein $0,1 \leq x < 1$, $0 < y < 2$, $0 \leq y' < 0,2$, $0 \leq y''$ $< 0,2$, $0 \leq y'+y'' < 0,2$, $0 \leq z < 0,5$, $0 \leq z' < 0,8$, $0 \leq z'' < 0,5$, $0 \leq \delta < 2$,
- One or more lithium ion conductors having a NASICON type structure, preferably LATP - $Li_{1.3}Al_{0.3}T_{1.7}P_3O_{12}$, LAGP - $Li_{1.5}Al_{0.5}Ge_{1.5}(PO_4)_3$ or any combination thereof,
- One or more lithium ion conductors having a perovskite type structure, preferably LLT - $Li_{3x}La_{2/3-x}TiO_3$,
- One or more lithium ion conductors having a spinel structure,
- One or more lithium ion conductors having a LISICON-type structure, preferably lithium zinc germanate.

6. Method according to one of the claims 1-5, wherein said ceramic phase content is the main content of said lithium ion conductor.

7. Lithium-ion conductive glass-ceramics powder comprising at least one lithium ion conductor, said at least one lithium ion conductor comprising a ceramic phase content and amorphous phase content, and wherein said powder having a polydispersity index between 0.5 and 1.5, preferably between 0.8 and 1.3, preferably between 0.85 and 1.15, preferably wherein said ceramic phase content is the main content of said lithium ion conductor.

8. Lithium-ion conductive glass-ceramics powder according to claim 7, wherein the volume based median particle size of said powder is below 2 micrometers, preferably below 1.5 micrometers, preferably below 1.0 micrometers.

9. Lithium-ion conductive glass-ceramics powder according to one of the claims 7-8, said lithium-ion conductive glass-ceramics powder having a grain-core conductivity of more than 0,75 mS/cm, preferably more than 1,5 mS/cm, preferably more than 2,3 mS/cm, preferably more than 5 mS/cm, preferably more than 6 mS/cm, and/or a grain-boundary conductivity of more than 0,5 mS/cm, preferably more than 0,75 mS/cm, preferably more than 0,9 mS/cm.

10. Lithium-ion conductive glass-ceramics powder according to one of the claims 7-9, wherein said at least one lithium ion conductor has an overall density lower than the density of said lithium ion conductor having only a ceramic phase, preferably wherein said overall density is at least 2.5% lower, preferably at least 3.0% lower, preferably at least 3.5% lower, preferably by at least 5% lower.

11. Lithium-ion conductive glass-ceramics powder according to one of the claims 7-10, wherein the purity of said ceramic phase content of said at least one lithium ion conductor is at least 95%, preferably more than 97%, preferably more than 99%.

12. Lithium-ion conductive glass-ceramics powder according to one of the claims 7-11, wherein said at least one ion conductor comprising at least one of

- One or more ion conductors having a garnet type structure, preferably LLZO - $Li_{6.4}La_3Zr_{1.4}Ta_{0.6}O_{12}$, lithium niobium garnet and/or lithium tantalum garnet,
- One or more ion conductors having a NASICON type structure, preferably LATP - $Li_{1.3}Al_{0.3}Ti_{1.7}P_3O_{12}$, LAGP

- $Li_{1.5}Al_{0.5}Ge_{1.5}(PO_4)_3$ or any combination thereof,
- One or more ion conductors having a perovskite type structure, preferably LLT - $Li_{3x}La_{2/3-x}TiO_3$,
- One or more ion conductors having a spinel structure,
- One or more ion conductors having a LISICON-type structure, preferably lithium zinc germanate.

13. Solid electrolyte manufactured with a method according to one of the claims 1-6.

14. Battery, preferably an all solid state battery or a lithium-air battery, comprising at least one battery component, said at least one battery component comprising a solid electrolyte according to claim 13, preferably said battery comprising at least two electrodes and wherein said at least one battery component is a separator separating said at least two electrodes, preferably wherein said separator is arranged on a surface of at least one of said at least two electrodes and/or said separator is provided in form of a free-standing membrane.

15. System for producing a solid electrolyte comprising lithium-ion conductive glass-ceramics, preferably for performing with a method according to one of the claims 1-6, said system comprising
a first provision entity adapted to provide at least one lithium ion conductor having a ceramic phase content and amorphous phase content,
a second provision entity adapted to provide a powder of said at least one lithium ion conductor, said powder having a polydispersity index between 0.5 and 1.5, preferably between 0.8 and 1.3, preferably between 0.85 and 1.15, and

a) an incorporating entity adapted to incorporate said powder into a polymer electrolyte or a polyelectrolyte and/or
b) a forming entity adapted to form an element using said powder.

Fig. 1

Fig. 2

Fig. 3

Europäisches
Patentamt

European
Patent Office

Office européen
des brevets

# EUROPEAN SEARCH REPORT

**Application Number**

EP 20 20 4965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/173130 A1 (SCHUHMACHER JÖRG [DE] ET AL) 6 June 2019 (2019-06-06) * paragraphs [0093] - [0095], [0102] - [0108] * ----- | 1-12,14, 15 | INV. H01M10/0525 H01M10/056 H01M10/0562 C03C10/00 |
| X | JP 2020 126760 A (MITSUI MINING & SMELTING CO) 20 August 2020 (2020-08-20) * paragraphs [0003], [0016], [0041] * * examples 1-3 * * table 1 * ----- | 1,2,6-9, 13 | |

TECHNICAL FIELDS
SEARCHED      (IPC)

H01M
C03C

The present search report has been drawn up for all claims

| Place of search | Date of completion of the search | Examiner |
|---|---|---|
| Munich | 13 April 2021 | Gregori, Giuliano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 20 4965

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2021

| Patent document cited in search report | Publication date | Patent family member(s) | Publication date |
|---|---|---|---|
| US 2019173130 A1 | 06-06-2019 | CN 109873195 A<br>DE 102017128719 A1<br>EP 3499630 A1<br>JP 2019102460 A<br>KR 20190065973 A<br>US 2019173130 A1 | 11-06-2019<br>06-06-2019<br>19-06-2019<br>24-06-2019<br>12-06-2019<br>06-06-2019 |
| JP 2020126760 A | 20-08-2020 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102017128719 A1
- DE 102018102387 B3
- DE 102014100684 A1